# EUROPEAN PATENT APPLICATION

(11) **EP 1 366 656 A2**
(43) Date of publication of application: **03.12.2003**
(21) Application number: 03009134.2
(22) Date of filing: 22.04.2003
(51) Int. Cl.: A01J 9/00

(54) **Lid for milking pail**

(30) Priority: 27.05.2002 IT MI20021142
(71) Applicant: INTERPULS S.P.A., 42020 Albinea, Reggio Emilia (IT)
(72) Inventor: Nicolini, Gabriele, 42020 Fabbrico, Reggio Emilia (IT); Sicuri, Roberto, 43100 Parma (IT)
(74) Representative: Giambrocono, Alfonso, Dr. Ing.

(57) **Abstract**

The lid (20) closes a pail (10) for collecting milk in milking plants of "pail type", and comprises a part (22) for closing the mouth of the pail (10), a milk entry tube (52), means (48) for applying a pneumatic pulsator (46) to the lid (20), means (44) for hanging a milking unit on the lid (20), means for providing a seal between the lid (20) and the mouth of the pail (10) during milking, and a handgrip (30) for facilitating the application of the lid (20) to the mouth of the pail (10) or its removal. The handgrip (30) of the lid (20) comprises a grippable portion (32) lying substantially within the plane in which the rotatable handle (12) of the pail (10) lies when the handle (12) is vertical. The grippable portion (32) laterally presents a groove (34) to receive the central part of the pail handle (12) when the handle (12) is vertical, the downward facing side of the groove (34) being in contact with the central part of the pail handle (12).

## Description

The present invention relates to a lid for a milk collection pail, used in small milking plants.

As is well known to the expert of the art, in small milking plants, commonly known as "pail-type" precisely because they use such an implement, the milk produced by milking a single animal is collected in a container (the said pail), which is movable manually and is provided with a rotatable handle roughly of trapezium shape. Pails of this type have a circular mouth of diameter less than their base and are constructed of stainless steel or of a transparent synthetic material suitable for contact with foods. These pails are closed by a circular lid, to be described in the following.

On termination of each milking operation, the operator empties the milk collected in the pail into a collection tank or a 50 litre drum. To do this the operator must firstly remove the lid closing the pail and then, using said handle and a side handgrip with which the pail is provided, pour the milk contained in the pail into the said tank or drum.

The pail lid can also be of stainless steel (in particular when the pail is of that material), or of transparent synthetic material suitable for contact with foods (for example polycarbonate). Whatever the material of construction of the lid, it traditionally presents the following characteristics:
- It is provided with an entry tube for the milk arriving from the milking manifold via a relative flexible hose. It should be noted that the milk entry tube can have two different inner diameters, namely a diameter of 14 mm to satisfy requirements dictated by milking animals of low genetics (which is the most widespread case for which a pail is used), or an inner diameter of 16 mm for animals of higher genetics.
- A pneumatic pulsator can be housed, enabling the milking operation in practice to be carried out. For this purpose the pulsator is normally provided with specific connectors which enable it to be fixed securely to the lid. These connectors, constructed of synthetic material, incorporate a nipple on which one end of a flexible hose piece can be mounted, enabling the pail interior to be connected to the vacuum line of the milking plant. For this purpose the vacuum line is provided with a series of cocks, to one of which (that located closest to the animal to be milked) the operator can connect the other (free) end of said flexible hose piece. The subsequent opening of this cock by the operator connects the interior of the pale (closed by the lid and provided with the milking unit and pulsator) to the vacuum line, to be able to effect the milking operation.
- It is provided with a hook on which to hang the milking unit, so that it can be moved together with the pail.
- It is provided with a flat gasket to ensure a perfect seal between the lid and the pail mouth.
- It has its own arc-shaped handle extending within a vertical plane central to the lid.

Besides facilitating the application of the lid to the mouth of the pail or its removal, this handle also has another function. Specifically, once the lid has been rested on the mouth of the pail, with the handle disposed such that the vertical plane in which it lies is perpendicular to the vertical plane containing the axis about which the pail handle can rotate, the lid can be locked in position by the pressure exerted on the lid handgrip by the pail handle when this latter is rotated and forced as far as possible onto the lid handgrip (the pail handle being finally substantially vertical). The lid is hence pressed onto the mouth of the pail to ensure the seal by means of the gasket with which the lid is provided.

In this situation, as the pail handle crosses over the lid handgrip, a final structure is obtained presenting a "cross" configuration in plan view. The operator uses this "cross" structure to grip it with the hand in order to move the combined pail and lid. In this situation the lid handgrip (as will be seen hereinafter) can be subjected to stresses which are too high.

This traditional "cross" gripping structure (which has been used for about a century as far as is known) presents however the following non-negligible drawbacks
a) The operator's hand is unable to make an ergonomic and unequivocal grip, so that the hand has to adapt itself as far as possible to the "cross" geometry of the gripping structure. The result is that manual conveying of the pail closed by the lid with relative accessories, especially when filled with milk, becomes extremely difficult, especially if the operator is not very strong and in particular is a woman.
b) precisely because the "cross" gripping structure does not allow unequivocal gripping by the operator (as will be apparent there are many possible gripping methods), it can happen that the operator, to move the pail filled with milk, grips also (because it is normally wider than the pail handle) one of the two parts of the lid handgrip on one or other side of its intersection with the pail handle. By doing this, the overall weight of the combination acts totally on the lid handgrip, to consequently generate stresses therein which, in the case of a lid of synthetic material, can in a more or less long run lead to breakage of the handgrip.
c) The clamping tensions generated in the lid handgrip (which can be of synthetic material) when the lid is locked in position by the pail handle can also reach dangerously high values, until causing breakage of the handgrip in not infrequent cases.

An object of the present invention is to provide a lid for a milking pail which does not present the aforestated drawbacks.

This object is attained by the lid of the present invention, characterised in that the lid handgrip comprises a grippable portion lying substantially within the plane in which the rotatable handle of the pail lies when this handle is vertical, this grippable portion laterally presenting a groove to receive the central part of the pail handle when this handle is vertical, the downward facing side of said groove being in contact with the central part of the pail handle.

As will be easily apparent, in a lid having the aforesaid characteristics, all the weight of the combination is discharged, via the pail handle, onto the hand of the user transporting the combination, without dangerous or excessive tensions being generated in the handgrip of the lid. Moreover (having eliminated the traditional cross-shaped gripping structure) the gripping portion can be made ergonomic and unequivocally grippable (there no longer existing any doubt regarding how the grippable portion has to be gripped by the user).

Although the seal between the lid and mouth of the pail is assured not only by the presence of a gasket (as in known lids) but also by the fact that a determined degree of vacuum exists in the pail during the milking operation, in the lid of the present invention the lower side of the lateral groove in the grippable portion preferably slightly interferes with the central portion of the pail handle, so that to make this portion enter said groove a slight force has to be exerted. This means that a slight thrust is exerted on the lid and hence on the relative seal gasket, to ensure a seal even when milking is not underway, and to retain the pail handle within the groove of the grippable portion, preventing the handle accidentally escaping from said groove.

To prevent this forcing of the pail handle into the groove of the grippable portion of the lid from generating on the seal gasket a pressure which in the long term can ruin the gasket (and significantly reduce its life, as happens in known lids), the two lateral arms of the handgrip (which connect the grippable portion to the actual lid) are not straight but are curved. To this end the overall handgrip is preferably of Ω shape, the two lateral arms of the handgrip hence being able to flex as a result of said forcing without excessive stresses being generated therein to compromise its integrity in the short or long term. A consequence is that said lateral arms can be made decidedly thinner than those of known lid handgrips, with a not inconsiderable cost saving.

To form a lid of synthetic material requiring even less material than known lids, in the lower face (that facing the pail interior) of the lid there are provided stiffening ribs that enable the thickness of the actual lid part (hereinafter called the closure part of the lid) to be significantly reduced. To prevent these ribs excessively stiffening the lid (which could generate stresses therein possibly resulting in their breakage), the ribs present interruptions.

As already stated, a determined degree of vacuum exists inside the pail during the milking operation. This means that when a stream of milk enters the pail through the milk entry tube provided in the lid, this stream widens considerably, to produce foam and milk droplets in suspension within the free volume inside the pail. If the fat particles present in the milk droplets in suspension in the vicinity of the pulsator enter this latter and become interposed between the movable elements housed in its interior, an alteration in the pulsator operation occurs, which becomes irregular. As is well known to the expert of the art, this represents a rather serious drawback.

Another object of the invention is therefore to obviate this drawback, or at least limit it significantly.

This object is also attained by the lid of the present invention, in which ribs are provided enabling the milk stream entering the pail through the milk entry tube in the lid to be conveyed substantially tangentially onto the side wall. This avoids shaking the entering milk stream, so significantly limiting (compared with known lids) break-up of its fat cells and the formation of foam, in addition to obtaining in the pail interior a "cyclone effect" generated by the entering milk together with that which gradually collects within the pail. More precisely, the term "cyclone effect" means herein a regime of centrifugal rotary flow against the side wall of the pail. Consequently the small milk droplets finely dispersed within the free space present in the pail are entrained by the "cyclone effect", to be concentrated, due to a centrifugal effect, within the annular space adjacent to the side wall of the pail. Any milk droplets that may deposit by cohesion on the central inner surface region of the lid are deviated towards the side wall of the pail by the presence of said tangentially extending ribs and by the centrifugal effect.

Consequently in the pail interior, below the lid, there is a central space substantially free of milk droplets. As already stated, this is of fundamental importance for the regular operation of the pulsator mounted on the lid.

Conveniently the lid comprises means for directly fitting the pulsator, without it being necessary to provide additional connection elements (as in the case of known lids).

The invention will be more easily understood from the following description of one embodiment thereof given by way of example. In this description reference is made to the accompanying drawings, in which:
Figure 1 is an elevational view of a pail and lid combination, the lid being formed in accordance with the present invention;
Figure 2 is a side elevation seen from a point rotated through 90 degrees from Figure 1, only the upper part of the pail being shown;
Figure 3 is a slightly enlarged vertical cross-section on the line 3-3 of Figure 2;
Figure 4 is an enlarged view of the part 4 of Figure 2, the pulsator being removed therefrom, the right half of this part being shown sectioned;
Figure 5 is an enlarged vertical section on the line 5-5 of Figure 2, also showing the outer profile of the relative end portion of the flexible hose for connection to the milking manifold;
Figure 6 is an enlarged view of the part 6 of Figure 2;
Figure 7 is a section therethrough on the line 7-7 of Figure 6;
Figure 8 is a plan view of the lid from below.

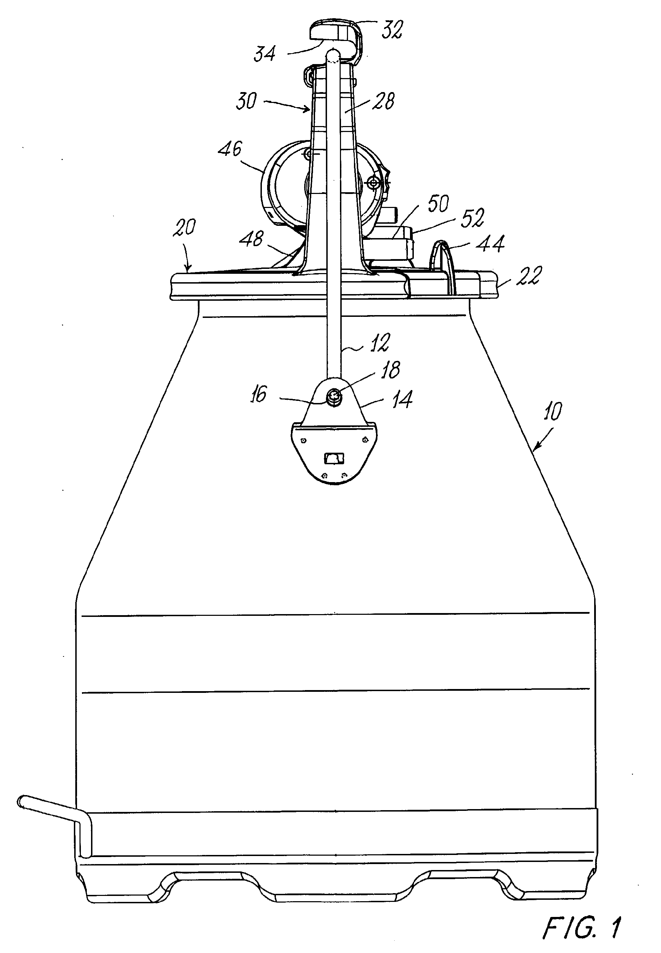

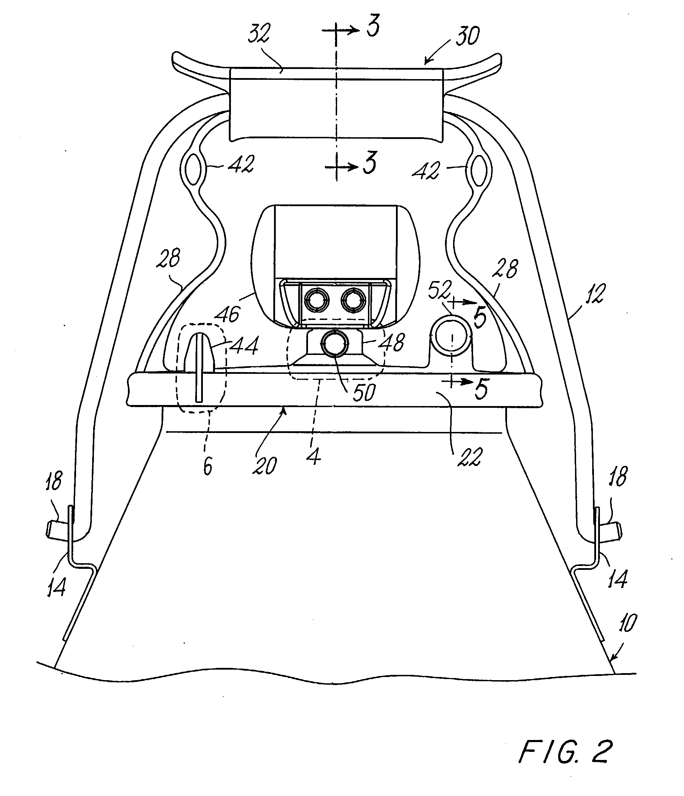

Figures 1 and 2 show a pail 10 for milking plants of pail type. In the illustrated embodiment the pail 10, of stainless steel, is of the type described in Italian utility model application Ml2002U 000073 and comprises: a circular mouth ring consisting of a ring having a solid rectangular cross-section; an upwardly tapered annular part obtained by pressing, to the upper edge of which the mouth ring is welded; a cup-shaped base obtained by pressing, to the upper edge of which the lower edge of the tapered part is welded; and a pressed resting element, press-fitted onto the bottom of the base to define a resting surface. Particularly, the resting element has at leas three peripherical lower protrusions (in the specific case the protrusion are six and find themeselves at the same angular distance) which are suitable to define said resting surface.

It should however be noted that for the purposes of the present invention the pail can also be of traditional type, either of stainless steel or of transparent synthetic material.

The pail 10 has a handle 12 obtained by suitably bending a round bar of stainless steel. The handle 12 is shown in its vertical position, but is rotatable, being hinged to the body of the pail 10 by two symmetrical diametrical lugs 14 fixed to the outside of the pail body. The lugs 14 present a hole 16 into which the relative bent end 18 of the handle 12 is inserted.

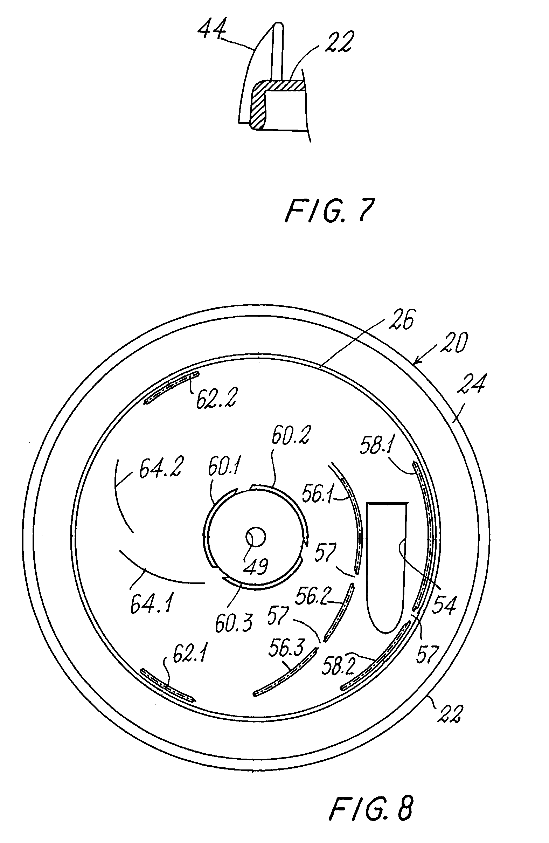

The upper mouth of the pail 10 is closed by a lid 20 of synthetic material, of the type suitable for contact with foods. The lid 20 comprises a circular part 22 (Figures 1, 2 and 8) arranged to close the mouth of the pail 10, the closure part 22 presenting a downwardly facing peripheral rib 24 (Figure 8). A circular ringshaped flat gasket (not shown for simplicity) provides a seal between the closure part 22 of the lid 20 and the mouth of the pail 10. This gasket is contained between the peripheral rib 24 and a more inner concentric circular rib 26, which also projects downwards from the lower face of the closure part 22 of the lid 20.

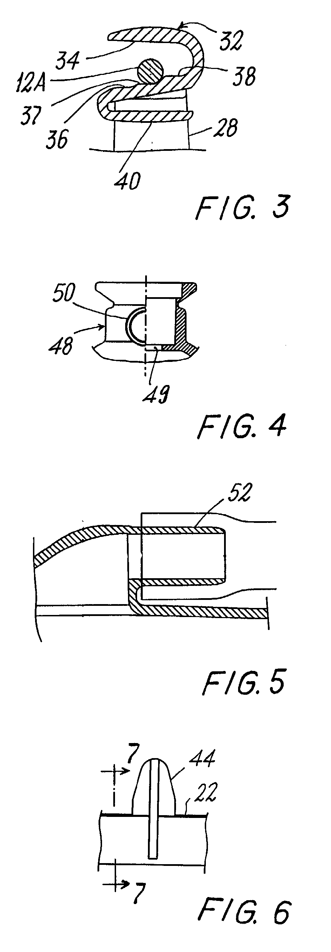

From the closure part 22, and in one piece therewith, there upwardly extend two lateral arms 28 forming part of a handgrip 30 for the lid 20. The handgrip is completed by a grippable portion 32 which forms its central part, in one piece with the lateral arms 28. As can be seen from Figure 2, because of the particular curved form of the arms 28 (as already explained), the handgrip 30 has an overall Ω shape. As can be seen from Figure 1, the grippable portion 32 of the handgrip 30 presents a lateral groove 34 to receive the horizontal central part 12A of the handle 12 of the pail 10. Specifically, as best seen in Figure 3, the central part 12A rests on the lower side of the groove 34 which in this specific case forms three steps 36, 37 and 38, with the central part 12A occupying the intermediate step 37. The existence of the three steps 36-38 essentially enables the lid to adapt to any type of currently available pail, the central part of the relative handle being able to occupy one of the three said steps by slightly forcing the handle.

As can be seen in Figure 3, the grippable portion 32 presents a cross-section similar to the shape of the number 2, and is provided with a lower bar 40. It should however be noted that the lower bar 40 could also not exist, the cross-section through the grippable portion then being roughly of C-shape.

From Figure 2 it can be seen that the lateral arms 28 of the handgrip 30 present in their upper part a short split portion, such that this portion (indicated by 42) of the arm 28 is roughly of elliptical shape. This means that the user has two sufficiently wide regions (42) available on which to comfortably press with the thumbs when the central portion of the handle 12 is to be inserted into or removed from the groove 34 of the handgrip 30.

As can be seen in Figures 1, 2, 6 and 7, the lid 20 presents a usual hook 44 for hanging the relative milking unit (not shown) in conventional manner.

From Figures 1 and 2 it can also be seen that a pneumatic pulsator 46 is applied to the lid 20. It is sufficient to note here that the pulsator 46 lowerly presents a groove of dovetail cross-section (as in the pulsator marketed by the proprietor of the present application and described in Italian patent application Ml2002A 000317). The lid 20 is provided with a means enabling the pulsator to be applied to it, and in particular a projecting connector 48 having a head of dovetail cross-section (Figure 4), this head being insertable into said dovetail groove of the pulsator 46. It should be noted that the connector 48 is integral with the rest of the lid, and additional connection elements are not required, as instead is the case with known lids. The connector 48 also comprises a tube 50 for connection to the vacuum line of the milking plant, and a through hole 49 connecting the interior of the pail 10 to the tube 50, all again formed in one piece with the rest of the lid 20. In reality the connection hole 49 is closed by a non-return valve (not shown for simplicity) which enables a determined degree of vacuum to be maintained inside the pail 10 even after the end of the milking operation.

The lid 20 also comprises (Figures 1, 2 and 5) a tube 52 for milk entry into the pail 10, this tube being joined to the closure part of the lid 20 in such a manner as to form therein (as can be seen in Figure 8, observing the lid from below) an aperture 54 through which the milk enters the pail 10. To prevent the milk spreading considerably (as happens with known lids) because of the vacuum present in the pail, the closure part of the lid 20 presents two sets of downwardly projecting arched conveying ribs, 56.1, 56.2, 56.3 and 58.1, 58.2 respectively. The purpose of these ribs is to prevent as far as possible the entering milk stream from spreading and at the same time to convey this stream along the side wall of the pail 10. This achieves the important advantage of not shaking the milk, so limiting both the break-down of its fat cells and the formation of foam. Another important advantage is that a "cyclone effect" is obtained in the pail 10, caused by the entering milk stream together with the milk that gradually collects in its interior. In this respect the entering milk stream, which is directed by the conveying ribs 56 and 58 tangentially to the side wall of the pail, also impresses a centrifugal rotary movement on the milk already present in the pail 10, hence causing said "cyclone effect". The small finely dispersed milk droplets which can form and remain suspended in the pail above the milk experience the "cyclone effect" and are also entrained, by the centrifugal effect, towards the side wall of the pail.

As can be seen from Figure 8, on the inside of the closure part 22 of the lid 20 there are also provided other tangential arched ribs, and in particular the reinforcement ribs 60.1, 60.2, 60.3 which strengthen the closure part 22 of the lid 20 and lie on a concentric circumference fairly close to the centre of the lid 20; and, for the same purpose, two ribs 62.1 and 62.2, which lie on the same circumference but adjacent to the circular rib 26 internally bounding the gasket of the lid 20, and which also perform the function of centering the lid 20 on the mouth of the pail 20. The conveying ribs 56 and 58 also stiffen the closure part 22. However, to prevent excessive stiffening (which could also lead to their breakage), the ribs 56, 58 and 60 are interrupted (57), so forming a series of ribs separated from each other. It should be noted that the interruptions 57 are shaped (Figure 8) such that the conveying action of the ribs 56 and 58 is not substantially influenced by the presence of the interruptions 57.

Preferably, on the inner surface of the closure part of the lid there are also provided arched ribs 64.1 and 64.2 which project only slightly (for example by 1.5 mm compared with the 5-6 mm of the preceding ribs). To graphically distinguish the ribs 64 from the other ribs, the former are shown in Figure 8 by a single line. The ribs 64 contribute (together with the "cyclone effect") to deviating towards the side wall of the pail any milk droplets which may deposit on the inner surface of the lid by cohesion. By virtue of this expedient, an upper central volume substantially free of milk droplets is formed within the pail 10, below the pulsator 46. This is very important because (as already explained) it prevents any operating irregularities arising in the pulsator due to the entry of milk droplets therein.

In conclusion, it should be noted that (as known to the expert of the art) a pail with a lid such as that described and illustrated is not only usable in milking plants of the pail type, but can also usefully be used in the case of large milking plants when individual animals have health problems, so that the milk produced by them has to be kept separate from that of the healthy animals.

## Claims

1. A lid (20) for a pail (10) for collecting milk in milking plants of "pail type", comprising a part (22) for closing the mouth of the pail (10), a milk entry tube (52), means (48) for applying a pneumatic pulsator (46) to the lid (20), means (44) for hanging a milking unit on the lid (20), means for providing a seal between the lid (20) and the mouth of the pail (10) during milking, and a handgrip (30) for facilitating the application of the lid (20) to the mouth of the pail (10) or its removal, **characterised in that** the handgrip (30) of the lid (20) comprises a grippable portion (32) lying substantially within the plane in which the rotatable handle (12) of the pail (10) lies when the handle (12) is vertical, the grippable portion (32) laterally presenting a groove (34) to receive the central part of the pail handle (12) when the handle (12) is vertical, the downward facing side of the groove (34) being in contact with the central part of the pail handle (12).

2. A lid (20) as claimed in claim 1, wherein the lower side of the lateral groove (34) provided in the grippable portion (32) of the handgrip (30) slightly interferes with the central portion of the pail handle (12), so as to exert a slight thrust on the lid (20), in order to ensure a seal even when milking is not underway, and to retain the handle (12) within the groove (34).

3. A lid (20) as claimed in claim 2, wherein the handgrip (30) has two lateral arms (28) of curved extension.

4. A lid (20) as claimed in claim 1, wherein the stiffening ribs (56, 58, 60, 62) are provided on its lower face to reduce the quantity of material used to form the closure part (22) of the lid (20).

5. A lid (20) as claimed in claim 4, wherein to prevent the closure part (22) of the lid (20) becoming excessively stiffened by the stiffening ribs (56, 58, 60), the ribs (56, 58, 60) present interruptions (57).

6. A lid (20) as claimed in claim 1, wherein on the lower surface of the closure part (22) of the lid (20), ribs (56, 58) are provided enabling the milk stream entering the pail (10) through the milk entry tube (52) in the lid (20) to be conveyed substantially tangentially onto the side wall.

7. A lid (20) as claimed in claim 1, wherein on the inner surface of the closure part (22) of the lid (20), ribs (64) are provided which project only slightly compared with the conveying and/or stiffening ribs (56, 58, 60, 62), their purpose being to convey towards the side wall of the pail (10) the milk droplets deposited on the inner surface of the closure part (22).

8. A lid (20) as claimed in claim 4, wherein the stiffening ribs (56, 58, 60) have an arched extension favouring the initiation of a "cyclone effect".
